(19) Europäisches Patentamt
European Patent Office
Office européen des brevets

(11) **EP 3 178 879 B1**

(12) **EUROPEAN PATENT SPECIFICATION**

(45) Date of publication and mention of the grant of the patent:
**11.10.2023 Bulletin 2023/41**

(21) Application number: **15840665.2**

(22) Date of filing: **10.07.2015**

(51) International Patent Classification (IPC):
***C08L 15/00*** (2006.01) ***B60C 1/00*** (2006.01)
***C08K 3/04*** (2006.01) ***C08K 3/36*** (2006.01)
***C08L 9/06*** (2006.01) ***C08L 91/06*** (2006.01)

(52) Cooperative Patent Classification (CPC):
(C-Sets available)
**C08K 3/36; B60C 1/0016; C08K 3/04; C08L 9/06; C08L 15/00; C08L 91/06** (Cont.)

(86) International application number:
**PCT/JP2015/069836**

(87) International publication number:
**WO 2016/039009 (17.03.2016 Gazette 2016/11)**

(54) **PNEUMATIC TIRE**

LUFTREIFEN

PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.09.2014 JP 2014182395**

(43) Date of publication of application:
**14.06.2017 Bulletin 2017/24**

(73) Proprietor: **Sumitomo Rubber Industries, Ltd.**
**Kobe-shi, Hyogo 651-0072 (JP)**

(72) Inventor: **TSUCHIDA Tsuyoshi**
**Kobe-shi**
**Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 1 975 199**
**EP-B1- 2 957 572**
**WO-A1-2014/126184**
**WO-A1-2014/126184**
**WO-A1-2014/133097**
**JP-A- 2003 277 560**
**JP-A- 2008 184 517**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08K 3/04, C08L 15/00;**
**C08K 3/36, C08L 15/00;**
**C08L 9/06, C08K 3/04, C08L 91/06;**
**C08L 15/00, C08K 3/04, C08L 91/06**

## Description

TECHNICAL FIELD

The present invention relates to a pneumatic tire formed from a specific rubber composition.

BACKGROUND ART

With the recent increase in concern about environmental issues, the demand on automobiles for better fuel economy has been increasing. It has been proposed to improve the fuel economy of tires, for example, by using a two-layer tread consisting of a base tread with low heat build-up properties and a cap tread, but further improvement is needed. Additionally, with improvements in the performance of automobiles and the development of road networks, there has been a need to improve the handling stability of tires, particularly during high speed driving.

Regarding these needs, incorporating a large amount of carbon black in a tread increases the rigidity of the tread portion and enhances rubber tensile strength and handling stability, but reduces fuel economy. On the other hand, the use of a reduced amount of carbon black improves fuel economy, but reduces rigidity, thereby reducing rubber tensile strength and handling stability. Thus, it has been difficult to improve all of rubber tensile strength, handling stability, and fuel economy.

Patent Literature 1 proposes a method using a diene rubber (modified rubber) that has been modified with an organosilicon compound containing an amino group and an alkoxy group. This method, however, has difficulty in improving all of rubber tensile strength, handling stability, and fuel economy.

WO 2014 / 133 097 A1 & EP 2 963 087 A1 disclose a tire member, a hydrogenated conjugated diene polymer, and a polymer composition comprising the hydrogenated conjugated diene polymer derived from butadiene and a structural unit derived from an aromatic vinyl compound, in particular styrene.

WO 2014 / 126 184 A1 & EP 2 957 572 A1 disclose a method for producing a hydrogenated conjugated diene polymer.

JP 2003 277 560 A discloses a copolymer composition comprising a hydrogenated copolymer, in particular a styrene-butadiene copolymer.

JP 2008 184 517 A discloses a rubber composition for a tread rubber comprising an aromatic vinyl-conjugated diene copolymer, in particular a rubber composition comprising a SBR matrix rubber (A-1), an ionomer-modified liquid SBR (B-1) and/or an ionomer modified hydrogenated SBR (B-2).

CITATION LIST

PATENT LITERATURE

Patent Literature 1: JP 2000-344955 A

SUMMARY OF INVENTION

TECHNICAL PROBLEM

The present invention aims to solve the above problems and provide a pneumatic tire having improved rubber tensile strength, fuel economy, and handling stability.

SOLUTION TO PROBLEM

The present invention relates to a pneumatic tire comprising a base tread formed from a rubber composition, the rubber composition comprising: a hydrogenated styrene-butadiene copolymer obtained by copolymerization of an aromatic vinyl compound and a conjugated diene compound, the hydrogenated styrene-butadiene copolymer having a degree of hydrogenation of the conjugated diene units of 75 mol% or more, a weight average molecular weight of 200,000 to 2,000,000, and a styrene content of 5% to 40% by mass,
carbon black, and silica, the rubber composition comprising, per 100% by mass of a rubber component, 75% by mass or more of the hydrogenated styrene-butadiene copolymer, the rubber composition comprising, relative to 100 parts by mass of the rubber component, 30 to 80 parts by mass of the carbon black and 10 to 80 parts by mass of the silica, wherein the base tread refers to an inner layer of a tread having a multilayer structure.

The hydrogenated styrene-butadiene copolymer preferably has a degree of hydrogenation of 90 mol% or more.

The hydrogenated styrene-butadiene copolymer is preferably a hydrogenated modified styrene-butadiene copolymer.
The hydrogenated styrene-butadiene copolymer is preferably present in an amount of 90% to 100% by mass per 100% by mass of the rubber component.

ADVANTAGEOUS EFFECTS OF INVENTION

The pneumatic tire comprising a base tread of the present invention is formed from a rubber composition comprising certain amounts of a specific hydrogenated copolymer having a degree of hydrogenation of 75 mol% or more and carbon black. Such a pneumatic tire has good rubber tensile strength, good fuel economy, and good handling stability.

DESCRIPTION OF EMBODIMENTS

The pneumatic tire of the present invention comprising a base tread is formed from a rubber composition. The base tread refers to an inner layer of a tread having a multilayer structure. The rubber composition comprises, per 100% by mass of the rubber component, 75% by mass or more of a hydrogenated styrene-butadiene copolymer obtained by copolymerizing an aromatic vinyl compound and a conjugated diene compound to produce a copolymer (hereinafter, also referred to as a copolymer of an aromatic vinyl compound and a conjugated diene compound), and hydrogenating the conjugated diene units of the copolymer to give a degree of hydrogenation of 75 mol% or more. The hydrogenated styrene-butadiene copolymer further has a weight average molecular weight of 200,000 to 2,000,000, and a styrene content of 5% to 40% by mass. The rubber composition also comprises 30 to 80 parts by mass of carbon black relative to 100 parts by mass of the rubber component. The rubber composition also comprises 10 to 80 parts by mass of silica relative to 100 parts by mass of the rubber component.
The rubber composition in the present invention comprises not only carbon black in an amount of 30 to 80 parts by mass relative to 100 parts by mass of the rubber component but also a specific hydrogenated styrene-butadiene copolymer having a degree of hydrogenation of the conjugated diene units of 75 mol% or more in an amount of 75% by mass or more per 100% by mass of the rubber component to significantly improve rubber tensile strength, fuel economy, and handling stability (especially rubber tensile strength).
The rubber composition in the present invention is characterized by comprising, in the rubber component, a hydrogenated copolymer obtained by hydrogenating the conjugated diene units of a copolymer of an aromatic vinyl compound and a conjugated diene compound. Since conventional rubbers contain a large number of double bonds at which a crosslinking reaction can take place, they will have variations in crosslink concentration which are considered to cause stress concentration that can initiate fracture. According to the present invention, the hydrogenation treatment reduces the number of double bonds, thereby reducing the number of reactive sites for crosslinking. As a result, it is expected that the variations in crosslink concentration decrease so that the stress concentration is relaxed, resulting in improvements in rubber tensile strength and other properties.
Examples of the aromatic vinyl compound include styrene, $\alpha$-methylstyrene, 1-vinylnaphthalene, 3-vinyltoluene, ethylvinylbenzene, divinylbenzene, 4-cyclohexylstyrene, and 2,4,6-trimethylstyrene. Each of these may be used alone, or two or more of these may be used in combination. Among these examples, styrene is particularly preferred in view of practical aspects such as monomer availability and because the effects of the present invention can be more suitably achieved.
Examples of the conjugated diene compound include 1,3-butadiene, isoprene, 1,3-pentadiene, 2,3-dimethylbutadiene, 2-phenyl-1,3-butadiene, and 1, 3-hexadiene. Each of these may be used alone, or two or more of these may be used in combination. Among these examples, 1,3-butadiene or isoprene is preferred, with 1,3-butadiene being more preferred, in view of practical aspects such as monomer availability and because the effects of the present ' invention can be more suitably achieved.
The copolymer of an aromatic vinyl compound and a conjugated diene compound is preferably a copolymer of styrene and 1,3-butadiene (styrene-butadiene copolymer). The hydrogenated copolymer is thus preferably a hydrogenated styrene-butadiene copolymer. Furthermore, the hydrogenated styrene-butadiene copolymer is preferably a hydrogenated modified styrene-butadiene copolymer that has been modified as described later.
The styrene-butadiene copolymer may be produced by copolymerization of styrene and 1, 3-butadiene in any order, and may be produced by random copolymerization or block copolymerization, and preferably by random copolymerization. The same is true for copolymers of aromatic vinyl compounds and conjugated diene compounds other than styrene-butadiene copolymers.
The degree of hydrogenation of the hydrogenated copolymer (the degree of hydrogenation of the conjugated diene units of the copolymer of an aromatic vinyl compound and a conjugated diene compound) is 75 mol% or more, preferably 80 mol% or more, more preferably 90 mol% or more, still more preferably 93 mol% or more. When the degree of hydrogenation is less than 75 mol%, fuel economy and handling stability are not readily improved. The degree of hydrogenation of the hydrogenated copolymer is also preferably 99 mol% or less, more preferably 98 mol% or less .

When the degree of hydrogenation is more than 99 mol%, the rubber composition may become hard.

The degree of hydrogenation can be calculated from the rate of decrease in the intensity of a $^1$H-NMR spectrum corresponding to unsaturated bonds.

The hydrogenated copolymer preferably has a weight average molecular weight (Mw) of 200,000 or more, more preferably 400,000 or more. When the Mw is less than 200,000, good rubber tensile strength may not be obtained. The Mw of the hydrogenated copolymer is also preferably 2,000,000 or less, more preferably 1,000,000 or less, still more preferably 700,000 or less. When the Mw is more than 2,000,000, processability tends to decrease.

Herein, the weight average molecular weight (Mw) and the number average molecular weight (Mn) can be determined by gel permeation chromatography (GPC) (GPC-8000 series available from Tosoh Corporation, detector: differential refractometer, column: TSKGEL SUPERMULTIPORE HZ-M available from Tosoh Corporation) relative to polystyrene standards.

In the case where the hydrogenated copolymer is a hydrogenated styrene-butadiene copolymer, the hydrogenated styrene-butadiene copolymer preferably has a styrene content of 5% by mass or more, more preferably 10% by mass or more, still more preferably 15% by mass or more, particularly preferably 20% by mass or more, most preferably 25% by mass or more. When the styrene content is less than 5% by mass, sufficient grip performance may not be obtained. The styrene content of the hydrogenated styrene-butadiene copolymer is also preferably 40% by mass or less, more preferably 35% by mass or less. When the styrene content is more than 40% by mass, sufficient rubber tensile strength may not be obtained, and fuel economy may also deteriorate. When the styrene content falls within the range indicated above, the effects of the present invention can be more suitably achieved.

The styrene content is measured as described in the Examples later.

The hydrogenated copolymer may be synthesized, for example, by polymerizing an aromatic vinyl compound and a conjugated diene compound to produce a polymer, and hydrogenating the polymer, and specifically by the following method.

<Method for producing copolymer>

(Polymerization method)

The copolymer of an aromatic vinyl compound and a conjugated diene compound may be polymerized by any method, including solution polymerization, vapor phase polymerization, and bulk polymerization, and particularly preferably by solution polymerization. The polymerization may be carried out in a batch mode or in a continuous mode.

In the case of solution polymerization, the monomer concentration (the combined concentration of styrene and 1,3-butadiene for styrene-butadiene copolymers) in the solvent is preferably 5% by mass or more, more preferably 10% by mass or more. When the monomer concentration in the solution is less than 5% by mass, the copolymer yield tends to be small, resulting in increased cost. The monomer concentration in the solvent is also preferably 50% by mass or less, more preferably 30% by mass or less. When the monomer concentration in the solvent is more than 50% by mass, the solution tends to become too viscous to stir easily, and thus polymerization tends not to occur easily.

(Polymerization initiator in anionic polymerization)

In the case of anionic polymerization, any type of polymerization initiator may be used, but preferred are organic lithium compounds. The organic lithium compound is preferably one containing a C2-C20 alkyl group, and examples include ethyllithium, n-propyllithium, isopropyllithium, n-butyllithium, sec-butyllithium, tert-butyllithium, tert-octyllithium, n-decyllithium, phenyllithium, 2-naphthyllithium, 2-butylphenyllithium, 4-phenylbutyllithium, cyclohexyllithium, cyclopentyllithium, and reaction products of diisopropenylbenzene and butyllithium. In view of availability, safety and other aspects, n-butyllithium or sec-butyllithium is preferred among these.

The polymerization reaction may be carried out in the presence of a compound (R) obtained by mixing at least one of the organic lithium compounds mentioned above with a compound (B1) containing a functional group interactive with silica. When the polymerization is carried out in the presence of the compound (R), the functional group interactive with silica is introduced to the polymerization initiating terminal of the copolymer. As a result, the copolymer has a modified polymerization initiating terminal. The term "interactive" herein means the formation of a covalent bond or an intermolecular force weaker than covalent bonds (e.g. electromagnetic forces between molecules such as ion-dipole interaction, dipole-dipole interaction, hydrogen bond, or van der Waals force) between molecules. The term "functional group interactive with silica" refers to a group having at least one atom interactive with silica such as a nitrogen atom, a sulfur atom, a phosphorus atom, or an oxygen atom.

The compound (R) is preferably a reaction product of an organic lithium compound and a nitrogen-containing compound such as a secondary amine compound, among others. Specific examples of the nitrogen-containing compound include dimethylamine, diethylamine, dipropylamine, dibutylamine, dodecamethyleneimine, N,N'-dimethyl-N'-trimethylsilyl-1,6-diaminohexane, piperidine, pyrrolidine, hexamethyleneimine, heptamethyleneimine, dicyclohexylamine, N-methylbenzylamine, di-(2-ethylhexyl)amine, diallylamine, morpholine, N-(trimethylsilyl)piperazine, N-(tert-butyldimethylsilyl)piperazine, and 1,3-ditrimethylsilyl-1,3,5-triazinane. The polymerization in the presence of the compound (R) may be carried out by preliminarily mixing an organic lithium compound with a compound (B1) to prepare a compound (R), and adding the compound (R) to the polymerization system followed by polymerization. Alternatively, it may be carried out by adding an organic lithium compound and a compound (B1) to the polymerization system and mixing them in the polymerization system to prepare a compound (R) followed by polymerization.

(Method for anionic polymerization)

The production of the copolymer through anionic polymerization using the polymerization initiator may be carried out by any method including conventionally known methods.

Specifically, styrene and 1,3-butadiene, for example, may be anionically polymerized in an organic solvent inert to the reaction, for example, a hydrocarbon solvent such as an aliphatic, alicyclic, or aromatic hydrocarbon compound, using a polymerization initiator such as butyllithium, optionally in the presence of a randomizer to produce a target copolymer such as a styrene-butadiene copolymer.

(Hydrocarbon solvent in anionic polymerization)

The hydrocarbon solvent is preferably a C3-C8 hydrocarbon solvent, and examples include propane, n-butane, isobutane, n-pentane, isopentane, n-hexane, cyclohexane, propene, 1-butene, isobutene, trans-2-butene, cis-2-butene, 1-pentene, 2-pentene, 1-hexene, 2-hexene, benzene, toluene, xylene, and ethylbenzene. Each of these may be used alone, or two or more of these may be used in admixture.

(Randomizer in anionic polymerization)

The randomizer refers to a compound that has the function of controlling the microstructure of the conjugated diene units of a copolymer, for example, increase of 1,2-butadiene units or 3,4-isoprene units, or the function of controlling the compositional distribution of monomer units in a copolymer, for example, randomization of styrene units and butadiene units in a styrene-butadiene copolymer. The randomizer is not particularly limited, and any compound commonly and conventionally used as randomizer may be used. Examples include ethers and tertiary amines, such as dimethoxybenzene, tetrahydrofuran, dimethoxyethane, diethylene glycol dibutyl ether, diethylene glycol dimethyl ether, bis(tetrahydrofuryl)propane, triethylamine, pyridine, N-methylmorpholine, N,N,N' ,N'-tetramethylethylenediamine, and 1,2-dipiperidinoethane. Other examples include potassium salts such as potassium-t-amylate and potassium-t-butoxide, and sodium salts such as sodium-t-amylate. Each of these randomizers may be used alone, or two or more of these may be used in combination. The amount of the randomizer to be used per mol of the organic lithium compound is preferably 0.01 mole equivalents or more, more preferably 0.05 mole equivalents or more. When the amount of the randomizer is less than 0.01 mole equivalents, the effect of the added randomizer tends to be small, and thus randomization tends not to occur easily. The amount of the randomizer per mol of the organic lithium compound is also preferably 1,000 mole equivalents or less, more preferably 500 mole equivalents or less. When the amount of the randomizer is more than 1,000 mole equivalents, the reaction rate of monomers tends to change greatly, and as a result randomization tends to fail to occur easily as expected.

(Reaction temperature)

The anionic polymerization may be carried out at any reaction temperature as long as the reaction suitably proceeds. In general, the reaction temperature is preferably -10°C to 100°C, more preferably 25°C to 70°C

(Modification step)

A functional group interactive with silica may be introduced to the polymerization terminating terminal of the copolymer obtained by the above polymerization step by the step of reacting the active terminal of the copolymer with a compound (B2) containing a functional group interactive with silica. As a result, the copolymer has a modified polymerization terminating terminal. The term "terminal" herein refers to an end portion of the molecular chain, excluding monomer-derived structures containing carbon-carbon double bonds.

The copolymer used in the modification reaction (hereinafter, also referred to as terminal modification reaction) may be any copolymer which has an active terminal either with a modified or unmodified polymerization initiating terminal. The compound (B2) may be any compound which contains a functional group interactive with silica and is reactable

with the polymerization active terminal. Preferable specific examples of the compound (B2) include:

(I) a compound (B2-1) represented by the following Formula (1):

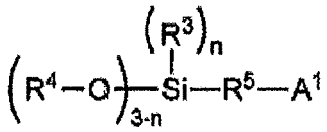 (1)

wherein $A^1$ represents a monovalent functional group which contains no active hydrogen, but contains at least one selected from the group consisting of a nitrogen atom, a phosphorus atom, and a sulfur atom, and is bound to $R^5$ through a nitrogen atom, a phosphorus atom, or a sulfur atom; $R^3$ and $R^4$ each represent a hydrocarbyl group; $R^5$ represents a hydrocarbylene group; and n represents an integer of 0 to 2, provided that when two or more $R^3$ or $R^4$ groups are present, they may be the same or different;

(II) a compound (B2-2) that has, in the molecule, one or more functional groups (x1) of at least one type selected from the group consisting of a cyclic ether group, a (thio)carbonyl group, and an iso(thio) cyanate group, and one or more groups (x2) different from the functional groups (x1) which contain no active hydrogen but contain at least one selected from the group consisting of a nitrogen atom, a phosphorus atom, an oxygen atom, and a sulfur atom, provided that at least one of the nitrogen, phosphorus, and sulfur atoms may be protected by a trisubstituted hydrocarbylsilyl group; and

(III) a compound (B2-3) having two or more iso(thio)cyanate groups in the molecule. Each of these compounds (B2) may be used alone, or two or more of these compounds (B2) may be used in combination. Herein, the term "(thio)carbonyl group" refers to a carbonyl group and a thiocarbonyl group; and the term "iso(thio)cyanate group" refers to an isocyanate group and an isothiocyanate group.

The hydrocarbyl group for $R^3$ and $R^4$ in Formula (1) is preferably a linear or branched C1-C20 alkyl group, a C3-C20 cycloalkyl group, or a C6-C20 aryl group.

$R^5$ is preferably a linear or branched C1-C20 alkanediyl group, a C3-C20 cycloalkylene group, or a C6-C20 arylene group.

Preferably, n is 0 or 1 in order to enhance the reactivity with the copolymer.

$A^1$ contains at least one selected from the group consisting of a nitrogen atom, a phosphorus atom, and a sulfur atom (hereinafter, also referred to as specific atom), and is bound to $R^5$ through the specific atom. The specific atom is bound to no active hydrogen, and may be protected by, for example, a trisubstituted hydrocarbylsilyl group. The term "active hydrogen" herein refers to a hydrogen atom bound to an atom other than a carbon atom, and preferably refers to a hydrogen atom having a lower bond energy than the carbon-hydrogen bond of polymethylene.

Preferably, $A^1$ is a group that can be converted to an onium ion by the action of an onium salt-forming agent, among others. The compound (B2) containing such a group ($A^1$) can impart excellent shape-retaining properties to the copolymer to be modified.

Specific examples of $A^1$ include a nitrogen-containing group in which two hydrogen atoms of a primary amino group are substituted by two protecting groups; a nitrogen-containing group in which one hydrogen atom of a secondary amino group is substituted by one protecting group; a tertiary amino group; an imino group; a pyridyl group; a phosphorus-containing group in which two hydrogen atoms of a primary phosphino group are substituted by two protecting groups; a phosphorus-containing group in which one hydrogen atom of a secondary phosphino group is substituted by one protecting group; a tertiary phosphino group; and a sulfur-containing group in which one hydrogen atom of a thiol group is substituted by one protecting group. Among these, groups containing a nitrogen atom are preferred because they have good affinity with silica. The term "protecting group" refers to a functional group that converts $A^1$ to a functional group inert to the polymerization active terminal, such as, for example, a trisubstituted hydrocarbylsilyl group.

Specific examples of the compound (B2-1) are as follows: Examples of compounds containing both an alkoxysilyl group and a nitrogen-containing group in which two hydrogen atoms of a primary amine are substituted by two protecting groups, a nitrogen-containing group in which one hydrogen atom of a secondary amine is substituted by one protecting group, or a tertiary amino group include N,N-bis(trimethylsilyl)aminopropyltrimethoxysilane, N,N-bis(trimethylsilyl)aminopropylmethyldiethoxysilane, N,N',,N'-tris(trimethylsilyl)-N-(2-aminoethyl)-3-aminopropyltriethoxysilane, and 3-(4-trimethylsilyl-1-piperazino)propylmethyldimethoxysilane.

Examples of compounds containing both an alkoxysilyl group and an imino group or a pyridyl group include N-(1,3-dimethylbutylidene)-3-(triethoxysilyl)-1-propaneamine, N-(1-methylpropylidene)-3-(triethoxysilyl)-1-propaneamine, N-(4-N,N-dimethylaminobenzylidene)-3-(triethoxysilyl)-1-propaneamine, N-(cyclohexylidene)-3-(triethoxysilyl)-1-propaneamine, and trimethoxysilyl, methyldiethoxysilyl, or ethyldimethoxysilyl compounds corresponding to the foregoing triethoxysilyl compounds, N-(3-trimethoxysilylpropyl)-4,5-dihydroimidazole, N-(3-triethoxysilylpropyl)-4,5-dihydroimidazole, N-(3-trimethoxysilylpropyl)-4,5-imidazole, N-(3-triethoxysilylpropyl)-4,5-imidazole, 3-hexamethyleneiminopropyltrimethoxysilane, 3-hexamethyleneiminopropylmethyldimethoxysilane, and the foregoing compounds whose alkyl group and alkanediyl group are replaced with a C1-C6 alkyl group and a C1-C6 alkanediyl group, respectively.

Examples of compounds containing both an alkoxysilyl group and a phosphorus-containing group in which two hydrogen atoms of a primary phosphino group are substituted by two protecting groups, a phosphorus-containing group in which one hydrogen atom of a secondary phosphino group is substituted by one protecting group, a tertiary phosphino group, or a sulfur-containing group in which one hydrogen atom of a thiol group is substituted by one protecting group include P,P-bis(trimethylsilyl)phosphinopropylmethyldimethoxysilane, P,P-bis(trimethylsilyl)phosphinopropyltrimethoxysilane, 3-dimethylphosphinopropyltrimethoxysilane, 3-dimethylphosphinopropylmethyldimethoxysilane, 3-diphenylphosphinopropyltrimethoxysilane, 3-diphenylphosphinopropyltriethoxysilane, 3-diphenylphosphinopropylmeryldimethoxysilane, S-trimethylsilylmercaptopropylmethyldimethoxysilane, S-trimethylsilylmercaptopropyltrimethoxysilane, S-trimethylsilylmercaptopropyltriethoxysilane, S-trimethylsilylmercaptopropylmethyldiethoxysilane, and the foregoing compounds whose alkyl group and alkanediyl group are replaced with a C1-C6 alkyl group and a C1-C6 alkanediyl group, respectively. In addition, examples of compounds containing an iso(thio)cyanate group include 3-isocyanatopropyltrimethoxysilane and 3-isocyanatopropyltriethoxysilane.

In the compound (B2-2), the group (x2) is preferably a group that contains a nitrogen atom bound to no active hydrogen. Specific examples of such compounds include:

compounds containing a cyclic ether group, such as epoxy amine compounds, e.g. tetraglycidyl-1,3-bisaminomethylcyclohexane,

compounds containing a (thio)carbonyl group, such as 4-aminoacetophenones, e.g. 4-N,N-dimethylaminobenzophenone; bis(dihydrocarbylaminoalkyl)ketones, e.g. 1,7-bis(methylethylamino)-4-heptanone; dihydrocarbyl-aminoalkyl (meth)acrylates, e.g. 2-dimethylaminoethyl acrylate; hydrocarbylimidazolidinones, e.g. 1,3-dimethyl-2-imidazolidinone; N-hydrocarbylpyrrolidones, e.g. 1-phenyl-2-pyrrolidone; N-hydrocarbylcaprolactams, e.g. N-methyl-ε-caprolactam; N-dihydrocarbylformamides, e.g. N,N-diethylformamide; N,N-dihydrocarbylacetamides, e.g. N,N-dimethylacetamide; and (meth)acrylamides, e.g. N,N-dimethylacrylamide, and

compounds containing an iso(thio)cyanate group, e.g. 3-isocyanatopropyltrimethoxysilane.

Examples of the compound (B2-3) include 2,4-tolylene diisocyanate, 2,6-tolylene diisocyanate, diphenylmethane diisocyanate, naphthalene diisocyanate, triphenylmethane triisocyanate, p-phenylene diisocyanate, tris(isocyanatophenyl)thiophosphate, xylene diisocyanate, benzene-1,2,4-triisocyanate, naphthalene-1,2,5,7-tetraisocyanate, and 1,4-phenylene diisothiocyanate.

In particular, the compound (B2-1) is preferably used as the compound (B2) because it has high affinity with silica. When a silane compound (B2-1) is used, silicon tetrachloride or an epoxy-containing compound such as tetraglycidyl-1,3-bisaminomethylcyclohexane, for example, may be used with the silane compound (B2-1) to control the Mooney viscosity of the modified copolymer. The compounds (B2) mentioned above all have the same function in that they allow the resulting modified copolymer to have a modified polymerization terminating terminal. Accordingly, those which are not disclosed in the Examples later can also be used in the present invention. A structure represented by the Formula (1-1) below is introduced to the polymer terminal by a reaction between the compound represented by Formula (1) and the copolymer to be modified,

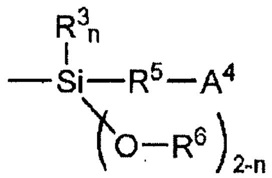
(1-1)

wherein $R^6$ represents a hydrogen atom or a hydrocarbyl group, and when two or more $R^6$ groups are present, they may be the same or different; and $A^4$, $R^3$, $R^5$ and n are as defined for $A^1$, $R^3$, $R^5$ and n, respectively, in Formula (1).

The terminal modification reaction may be carried out as a solution reaction, for example. The solution reaction may be conducted using a solution containing unreacted monomers obtained after completion of the polymerization reaction in the above polymerization step, or may be performed after the copolymer is isolated from the above solution and dissolved in an appropriate solvent such as cyclohexane. The terminal modification reaction may be carried out either batchwise or continuously. Here, the compound (B2) may be added by any method, for example, at one time, in

portions, or continuously.

The amount of the compound (B2) used in the terminal modification reaction may be selected appropriately according to the type of compound used in the reaction. The amount of the compound (B2) is preferably 0.1 mole equivalents or more, more preferably 0.3 mole equivalents or more relative to the metal atom of the polymerization initiator that is involved in the polymerization reaction. When 0.1 mole equivalents or more of the compound (B2) is used, the modification reaction can proceed sufficiently, and the dispersibility of silica can be suitably improved.

The temperature of the terminal modification reaction is usually the same as the temperature of the polymerization reaction, and is preferably -20°C to 150°C, more preferably 0°C to 120°C, particularly preferably 20°C to 100°C. When the temperature of the modification reaction is low, the viscosity of the modified copolymer tends to increase, while when the temperature of the modification reaction is high, the polymerization active terminal can be easily deactivated. The duration of the modification reaction is preferably one minute to five hours, more preferably two minutes to one hour.

(Termination of reaction)

The anionic polymerization may be terminated by addition of a reaction terminator usually used in this technical field. Examples of the reaction terminator include polar solvents containing active protons such as acetic acid, and methanol, ethanol, isopropanol, and other alcohols, and mixtures of the foregoing. Other examples include mixtures of the foregoing polar solvents and non-polar solvents such as hexane or cyclohexane. Usually, the amount of the reaction terminator to be added is sufficient when it is about equal to or twice the molar amount of the initiator for anionic polymerization.

<Coupling>

In the method for producing the copolymer, a coupling agent may be added to the hydrocarbon solution of the copolymer at any time from the initiation of the polymerization of monomers until the polymer is recovered as described later. Examples of the coupling agent include compounds represented by the following Formula (2-1):

$$R^1_aML_{4-a} \qquad (2-1)$$

wherein $R^1$ represents an alkyl group, an alkenyl group, a cycloalkenyl group, or an aryl group; M represents a silicon atom or a tin atom; L represents a halogen atom or a hydrocarbyloxy group; and a represents an integer of 0 to 2.

Examples of the coupling agent represented by Formula (2-1) include silicon tetrachloride, methyltrichlorosilane, dimethyldichlorosilane, trimethylchlorosilane, tin tetrachloride, methyltrichlorotin, dimethyldichlorotin, trimethylchlorotin, tetramethoxysilane, methyltrimethoxysilane, dimethoxydimethylsilane, methyltriethoxysilane, ethyltrimethoxysilane, dimethoxydiethylsilane, diethoxydimethylsilane, tetraethoxysilane, ethyltriethoxysilane, and diethoxydiethylsilane.

In order to enhance the processability of the polymer, the amount of the coupling agent to be added is preferably 0.03 mol or more, more preferably 0.05 mol or more, per mol of the alkali metal derived from an alkali metal catalyst. In order to enhance fuel economy, the amount is preferably 0.4 mol or less, more preferably 0.3 mol or less.

<Hydrogenation method>

In the method for producing the hydrogenated copolymer, the copolymer described above is hydrogenated to obtain a hydrogenated copolymer having a degree of hydrogenation of 75 mol% or more. The hydrogenation of the copolymer advantageously improves heat resistance. When the degree of hydrogenation is low, the effects of improving rubber fuel economy and handling stability are not sufficiently achieved.

The hydrogenation may be carried out by any method under any reaction condition, including known methods and known conditions. Usually, the hydrogenation is carried out at 20°C to 150°C under 0.1 to 10 MPa hydrogen pressure in the presence of a hydrogenation catalyst. The degree of hydrogenation may be set appropriately by changing, for example, the amount of the hydrogenation catalyst, the hydrogen pressure during the hydrogenation reaction, or the duration of the reaction. The hydrogenation catalyst used may be usually a compound containing any of the metals of groups 4 to 11 of the periodic table. For example, compounds containing any of Ti, V, Co, Ni, Zr, Ru, Rh, Pd, Hf, Re, and Pt atoms can be used as the hydrogenation catalyst. More specific examples of the hydrogenation catalyst include metallocene compounds containing Ti, Zr, Hf, Co, Ni, Pd, Pt, Ru, Rh, Re, or other metals; supported heterogeneous catalysts in which a metal such as Pd, Ni, Pt, Rh, or Ru is supported on a carrier such as carbon, silica, alumina, or diatomaceous earth; homogeneous Ziegler catalysts in which an organic salt or acetylacetone salt of a metal element such as Ni or Co is combined with a reducing agent such as an organoaluminum; organometallic compounds or complexes of Ru, Rh, or other metals; and fullerenes and carbon nanotubes in which hydrogen is stored.

Among the above exemplary compounds, metallocene compounds containing Ti, Zr, Hf, Co, or Ni are preferred because they allow the hydrogenation reaction to be conducted in a homogeneous system in an inert organic solvent. Furthermore, metallocene compounds containing Ti, Zr, or Hf are preferred. In particular, hydrogenation catalysts obtained by reaction of titanocene compounds and alkyllithiums are preferred because such catalysts are inexpensive and industrially very useful. Specific examples include hydrogenation catalysts described in, for example, JP H1-275605 A, JP H5-271326 A, JP H5-271325 A, JP H5-222115 A, JP H11-292924 A, JP 2000-37632 A, JP S59-133203 A, JP S63-5401 A, JP S62-218403 A, JP H7-90017 A, JP S43-19960 B, and JP S47-40473 B. Each of these hydrogenation catalysts may be used alone, or two or more of these may be used in combination.

The amount of the hydrogenated copolymer per 100% by mass of the rubber component is 75% by mass or more, preferably 80% by mass or more, more preferably 90% by mass or more, still more preferably 100% by mass. When the amount of the hydrogenated copolymer is less than 75% by mass, the effects of improving rubber tensile strength, fuel economy, and handling stability (especially rubber tensile strength) tend not to be easily achieved.

In particular, in the case where the hydrogenated copolymer is a hydrogenated styrene-butadiene copolymer, the amount of the hydrogenated styrene-butadiene copolymer per 100% by mass of the rubber component is preferably 90% by mass or more, more preferably 95% by mass or more, still more preferably 100% by mass.

Examples of other rubbers that may be used in addition to the hydrogenated copolymer include conventional styrene-butadiene copolymer rubber (SBR), polybutadiene rubber (BR), butadiene-isoprene copolymer rubber, and butyl rubber. Other possible examples include natural rubber (NR), ethylene-propylene copolymers, and ethylene-octene copolymers. Two or more of these rubbers may be used in combination.

In the case where the rubber composition in the present invention is used in treads, particularly base treads, of pneumatic tires, the rubber composition may contain NR in the rubber component.

The rubber composition in the present invention contains carbon black. Examples of the carbon black include furnace blacks (furnace carbon blacks) such as SAF, ISAF, HAF, MAF, FEF, SRF, GPF, APF, FF, CF, SCF, and ECF; acetylene blacks (acetylene carbon blacks) ; thermal blacks (thermal carbon blacks) such as FT and MT; channel blacks (channel carbon blacks) such as EPC, MPC, and CC; and graphite. Each of these may be used alone, or two or more of these may be used in combination.

The carbon black preferably has a nitrogen adsorption specific surface area ($N_2SA$) of 5 $m^2/g$ or more, more preferably 15 $m^2/g$ or more, still more preferably 35 $m^2/g$ or more, particularly preferably 55 $m^2/g$ or more. Carbon black having an $N_2SA$ of less than 5 $m^2/g$ may not produce a sufficient reinforcing effect, with the result that sufficient rubber tensile strength or handling stability may not be obtained. The $N_2SA$ is preferably 200 $m^2/g$ or less, more preferably 180 $m^2/g$ or less, still more preferably 100 $m^2/g$ or less, particularly preferably 80 $m^2/g$ or less. When the $N_2SA$ is more than 200 $m^2/g$, fuel economy tends to deteriorate.

The $N_2SA$ of the carbon black is determined in accorddance with JIS K 6217-2:2001.

The carbon black preferably has a dibutyl phthalate oil absorption (DBP) of 50 mL/100 g or more, more preferably 70 mL/100 g or more, still more preferably 90 mL/100 g or more. Carbon black having a DBP of less than 50 mL/100 g may not produce a sufficient reinforcing effect, with the result that sufficient rubber tensile strength or handling stability may not be obtained. The DBP of the carbon black is also preferably 200 mL/100 g or less, more preferably 150 mL/100 g or less, still more preferably 110 mL/100 g or less. When the DBP is more than 200 mL/100 g, fuel economy tends to deteriorate.

The DBP of the carbon black is measured in accordance with JIS K 6217-4:2001.

The amount of carbon black relative to 100 parts by mass of the rubber component is 30 parts by mass or more, preferably 35 parts by mass or more, more preferably 40 parts by mass or more. When the amount is less than 30 parts by mass, rubber tensile strength and handling stability tend to be poor. The amount is 80 parts by mass or less, preferably 75 parts by mass or less. When the amount is more than 80 parts by mass, fuel economy tends to deteriorate. When the amount falls within the range indicated above, good rubber tensile strength, good fuel economy, and good handling stability can be obtained.

The rubber composition in the present invention may contain another filler in addition to carbon black. The term "filler" herein refers to a material that may be incorporated in the rubber composition to reinforce rubber. Examples include, in addition to carbon black, white fillers such as silica, calcium carbonate, mica (e.g. sericite), aluminum hydroxide, magnesium oxide, magnesium hydroxide, clay, talc, alumina, titanium oxide, and mica. Two or more of these fillers may be used in combination. The rubber composition in the present invention preferably further contains as filler a white filler, more preferably silica, among others.

In the case where the rubber composition in the present invention contains silica, non-limiting examples of the silica include dry silica (anhydrous silica) and wet silica (hydrous silica) . Wet silica is preferred because it contains a large number of silanol groups.

The silica preferably has a nitrogen adsorption specific surface area ($N_2SA$) of 40 $m^2/g$ or more, more preferably 50 $m^2/g$ or more, still more preferably 100 $m^2/g$ or more, particularly preferably 150 $m^2/g$ or more. When the $N_2SA$ is less than 40 $m^2/g$, rubber tensile strength, fuel economy, or handling stability may deteriorate. The $N_2SA$ of the silica is

also preferably 300 $m^2/g$ or less, more preferably 250 $m^2/g$ or less, still more preferably 200 $m^2/g$ or less. Silica having an $N_2SA$ of more than 300 $m^2/g$ is difficult to disperse, with the result that fuel economy or processability may deteriorate.

The nitrogen adsorption specific surface area of the silica is measured by the BET method in accordance with ASTM D3037-81.

In the case where the rubber composition in the present invention contains silica, the amount of silica relative to 100 parts by mass of the rubber component is preferably 10 parts by mass or more, more preferably 20 parts by mass or more, still more preferably 25 parts by mass or more. The amount of silica is preferably 100 parts by mass or less, more preferably 80 parts by mass or less, still more preferably 70 parts by mass or less, particularly preferably 60 parts by mass or less. When the amount of silica falls within the range indicated above, the effects of the present invention can be more suitably achieved.

The rubber composition in the present invention preferably contains a silane coupling agent together with silica. In the present invention, although the use of the above-described hydrogenated copolymer with a high degree of hydrogenation may lead to insufficient crosslink density, a good crosslink network can be formed when silica and a silane coupling agent are incorporated together with the hydrogenated copolymer. As a result, the effects of the present invention can be more suitably achieved.

The silane coupling agent may be a conventionally known one, and examples include: sulfide silane coupling agents such as bis(3-triethoxysilylpropyl)tetrasulfide, bis(2-triethoxysilylethyl)tetrasulfide, bis(3-trimethoxysilylpropyl)tetrasulfide, bis(2-trimethoxysilylethyl)tetrasulfide, bis(3-triethoxysilylpropyl)trisulfide, bis(3-trimethoxysilylpropyl)trisulfide, bis(3-triethoxysilylpropyl)disulfide, bis(3-trimethoxysilylpropyl)disulfide, 3-trimethoxysilylpropyl-N,N-dimethylthiocarbamoyltetrasulfide, 3-trimethoxysilylpropylbenzothiazolyltetrasulfide, 3-triethoxysilylpropylbenzothiazoletetrasulfide, 3-triethoxysilylpropyl methacrylate monosulfide, and 3-trimethoxysilylpropyl methacrylate monosulfide; mercapto silane coupling agents such as 3-mercaptopropyltrimethoxysilane, 3-mercaptopropyltriethoxysilane, 2-mercaptoethyltrimethoxysilane, and 2-mercaptoethyltriethoxysilane; vinyl silane coupling agents such as vinyltriethoxysilane and vinyltrimethoxysilane; amino silane coupling agents such as 3-aminopropyltriethoxysilane, 3-aminopropyltrimethoxysilane, 3-(2-aminoethyl)aminopropyltriethoxysilane, and 3-(2-aminoethyl)aminopropyltrimethoxysilane; glycidoxy silane coupling agents such as γ-glycidoxypropyltriethoxysilane, γ-glycidoxypropyltrimethoxysilane, γ-glycidoxypropylmethyldiethoxysilane, and γ-glycidoxypropylmethyldimethoxysilane; nitro silane coupling agents such as 3-nitropropyltrimethoxysilane and 3-nitropropyltriethoxysilane; and chloro silane coupling agents such as 3-chloropropyltrimethoxysilane, 3-chloropropyltriethoxysilane, 2-chloroethyltrimethoxysilane, and 2-chloroethyltriethoxysilane. Each of these silane coupling agents may be used alone, or two or more of these may be used in combination. In view of the coupling effect of silane coupling agents, processability, and cost, sulfide silane coupling agents are preferred among these, with bis(3-triethoxysilylpropyl)tetrasulfide or bis(3-triethoxysilylpropyl)disulfide being more preferred.

The amount of the silane coupling agent relative to 100 parts by mass of silica is preferably 0.5 parts by mass or more, more preferably 1.5 parts by mass or more, still more preferably 2.5 parts by mass or more. The silane coupling agent in an amount of less than 0.5 parts by mass tends not to produce a sufficient coupling effect. The amount of the silane coupling agent relative to 100 parts by mass of silica is also preferably 20 parts by mass or less, more preferably 15 parts by mass or less, still more preferably 13 parts by mass or less. When the amount exceeds 20 parts by mass, the effect of improving the dispersibility of silica is less likely to be enhanced, which tends to unnecessarily increase the cost. Additionally, the scorch time tends to be reduced, and therefore the processability during kneading or extrusion tends to decrease.

In the case where the rubber composition contains carbon black and a white filler, preferably silica, the combined amount of carbon black and white filler, preferably silica, relative to 100 parts by mass of the rubber component is preferably 40 parts by mass or more, more preferably 60 parts by mass or more. The combined amount is preferably 150 parts by mass or less, more preferably 130 parts by mass or less, still more preferably 110 parts by mass or less. When the combined amount falls within the range indicated above, good rubber tensile strength, good fuel economy, and good handling stability can be obtained.

The rubber composition in the present invention may contain compounding agents conventionally used in the rubber industry, in addition to the above-described components. Examples include vulcanizing agents such as sulfur; vulcanization accelerators such as thiazole vulcanization accelerators, thiuram vulcanization accelerators, sulfenamide vulcanization accelerators, and guanidine vulcanization accelerators; vulcanization activators such as stearic acid and zinc oxide; organic peroxides; processing aids such as extender oil (oil) and lubricants; and antioxidants.

Examples of the extender oil (oil) include aromatic mineral oils (viscosity gravity constant (V.G.C.): 0.900 to 1.049), naphthenic mineral oils (V.G.C.: 0.850 to 0.899), and paraffinic mineral oils (V.G.C.: 0.790 to 0.849). The polycyclic aromatic content of the extender oil is preferably less than 3% by mass, more preferably less than 1% by mass. The polycyclic aromatic content is measured in accordance with the Institute of Petroleum (IP, U.K.) 346/92 method. The aromatic content (CA) of the extender oil is preferably 20% by mass or more. Two or more of these extender oils may be used in combination.

Examples of the vulcanization accelerator include thiazole vulcanization accelerators such as 2-mercaptobenzothiazole, dibenzothiazyl disulfide, and N-cyclohexyl-2-benzothiazylsulfenamide; thiuram vulcanization accelerators such as tetramethylthiuram monosulfide and tetramethylthiuram disulfide; sulfenamide vulcanization accelerators such as N-cyclohexyl-2-benzothiazolesulfenamide, N-t-butyl-2-benzothiazolesulfenamide, N-oxyethylene-2-benzothiazolesulfenamide, N-oxyethylene-2-benzothiazolesulfenamide, and N,N'-diisopropyl-2-benzothiazolesulfenamide; and guanidine vulcanization accelerators such as diphenylguanidine, diorthotolylguanidine, and orthotolylbiguanidine. Preferred among these are sulfenamide vulcanization accelerators, with N-cyclohexyl-2-benzothiazolesulfenamide being more preferred, because the effects of the present invention can be more suitably achieved. They are also preferably combined with guanidine vulcanization accelerators. The amount of the vulcanization accelerator is preferably 0.1 to 5 parts by mass, more preferably 0.2 to 4 parts by mass, relative to 100 parts by mass of the rubber component.

Non-limiting suitable examples of the vulcanizing agent include sulfur. The amount of sulfur relative to 100 parts by mass of the rubber component is preferably 0.5 to 5 parts by mass, more preferably 1 to 3 parts by mass. In such case, the effects of the present invention can be more suitably achieved.

The rubber composition in the present invention can be prepared by usual methods. Specifically, for example, the components described above are kneaded using a Banbury mixer, a kneader, an open roll mill, or the like, and the kneaded mixture is vulcanized, whereby the rubber composition is prepared.

The rubber composition in the present invention may be used for tire components, such as treads, sidewalls, carcasses, belts, beads, and clinches, and is especially suitable for base treads of pneumatic tires . A base tread refers to an inner layer of a tread having a multilayer structure, and in the case of a two-layer tread consisting of an outer surface layer (cap tread) and an inner surface layer (base tread), it corresponds to the inner surface layer. Specifically, the base tread is a component shown in, for example, Fig. 1 of JP 2008-285628 A or Fig. 1 of JP 2008-303360 A.

A multi-layer tread may be produced by assembling sheeted rubber compositions into a predetermined shape, or by feeding rubber compositions into an extruder with two or more screws, and forming them into a two- or more-layered product at the head outlet of the extruder.

The pneumatic tire of the present invention can be formed from the rubber composition by conventional methods. Specifically, a rubber composition incorporating a rubber component containing a hydrogenated copolymer and carbon black and optionally the aforementioned compounding agents, before vulcanization, is extruded and processed into the shape of a tire component such as a base tread and assembled with other tire components in a conventional manner on a tire building machine to build an unvulcanized tire. The unvulcanized tire is heated and pressurized in a vulcanizer, whereby a pneumatic tire of the present invention can be produced.

The pneumatic tire of the present invention is suitable for passenger vehicles, trucks and buses, two-wheeled vehicles, racing vehicles, and other vehicles and especially for passenger vehicles.

EXAMPLES

The present invention is specifically described with reference to, but not limited to, examples below.

The chemicals used in the synthesis or polymerization are collectively listed below. The chemicals were purified as needed by conventional techniques.

THF: anhydrous tetrahydrofuran available from Kanto Chemical Co., Inc.

n-Hexane: product of Kanto Chemical Co., Inc.

Styrene: product of Kanto Chemical Co., Inc.

Butadiene: 1,3-butadiene available from Tokyo Chemical Industry Co., Ltd.

n-Butyllithium solution: 1.6 M solution of n-butyllithium in hexane available from Kanto Chemical Co., Inc.

2,6-Di-tert-butyl-p-cresol: Nocrac 200 available from Ouchi Shinko Chemical Industrial Co., Ltd.

Alcohol: methanol available from Tokyo Chemical Industry Co., Ltd.

Amine modifier: N,N-bis(trimethylsilyl)-aminopropylmethyldiethoxysilane

The methods for evaluating the prepared copolymers are collectively described below.

(Measurement of degree of hydrogenation of conjugated diene units of copolymer)

A 15% by mass solution of each copolymer in carbon tetrachloride was prepared to measure a $^1$H-NMR spectrum at 100 MHz. The degree of hydrogenation was calculated from the rate of decrease in the intensity of the $^1$H-NMR spectrum corresponding to unsaturated bonds.

(Measurement of styrene content)

A $^1$H-NMR spectrum was measured using a JEOL JNM-A 400 NMR device at 25°C. The ratio of phenyl protons of the styrene unit at 6.5 to 7.2 ppm to vinyl protons of the butadiene unit at 4.9 to 5.4 ppm was determined based on the spectrum. The styrene content was calculated from the ratio.

(Measurement of weight average molecular weight (Mw) and number average molecular weight (Mn))

The weight average molecular weight (Mw) and number average molecular weight (Mn) of each copolymer were determined by gel permeation chromatography (GPC) (GPC-8000 series available from Tosoh Corporation, detector: differential refractometer, column: TSKGEL SUPERMULTIPORE HZ-M available from Tosoh Corporation) relative to polystyrene standards. In the case of copolymers containing a modifying group, the Mw and Mn were measured before the copolymers were modified. This is because the Mw and Mn of copolymers containing a modifying group are not accurately determinable due to the interaction between the modifying group and silica gel in the column.

<Copolymer Production Examples>

Synthesis Example 1 (Synthesis of copolymer (1): SBR with a degree of hydrogenation of 0 mol%)

To a sufficiently nitrogen-purged heat-resistant reaction vessel were charged 2,000 mL of n-hexane, 60 g of styrene, 140 g of butadiene, 1.75 g of THF, and 0.45 mmol of n-butyllithium, followed by stirring at 50°C for 5 hours to cause a polymerization reaction. After the reaction was terminated by addition of alcohol, 1 g of 2, 6-di-tert-butyl-p-cresol was added to the reaction solution. The resulting solution was purified by reprecipitation to obtain copolymer (1). The copolymer (1) had a weight average molecular weight (Mw) of 490,000 and a styrene content of 30% by mass.

Synthesis Example 2 (Synthesis of copolymer (2): hydrogenated SBR with a degree of hydrogenation of 60 mol%)

Copolymer (2) was produced as in the synthesis of copolymer (1), except that the obtained polymer was hydrogenated. Specifically, after the polymerization conversion reaction in the synthesis of copolymer (1), the polymerization reaction was not terminated by addition of alcohol. Instead, the reaction solution was then stirred for 20 minutes while supplying hydrogen gas at a pressure of 0.4 MPa gauge to react the unreacted polymer terminal lithium with hydrogen into lithium hydride. Hydrogenation was conducted using a titanocene dichloride-based catalyst at a hydrogen gas supply pressure of 0.7 MPa gauge and a reaction temperature of 90°C. Once the cumulative amount of absorbed hydrogen reached the amount corresponding to the target degree of hydrogenation, the reaction temperature was brought to room temperature and the hydrogen pressure was returned to an ordinary pressure, and then the reaction solution was drawn from the reaction vessel and introduced into water with stirring. The solvent was removed by steam stripping to obtain copolymer (2). The copolymer (2) had a degree of hydrogenation of 60 mol% and a weight average molecular weight (Mw) of 450,000.

Synthesis Example 3 (Synthesis of copolymer (3): hydrogenated SBR with a degree of hydrogenation of 80 mol%)

Copolymer (3) was produced as in the synthesis of copolymer (2), except that the cumulative amount of absorbed hydrogen was adjusted so as to correspond to the target degree of hydrogenation. The copolymer (3) had a degree of hydrogenation of 80 mol% and a weight average molecular weight (Mw) of 480,000.

Synthesis Example 4 (Synthesis of copolymer (4) : hydrogenated SBR with a degree of hydrogenation of 95 mol%)

Copolymer (4) was produced as in the synthesis of copolymer (2), except that the cumulative amount of absorbed hydrogen was adjusted so as to correspond to the target degree of hydrogenation. The copolymer (4) had a degree of hydrogenation of 95 mol% and a weight average molecular weight (Mw) of 450,000.

Synthesis Example 5 (Synthesis of copolymer (5): hydrogenated modified SBR with a degree of hydrogenation of 95 mol%)

To a sufficiently nitrogen-purged heat-resistant reaction vessel were charged 2,000 mL of n-hexane, 60 g of styrene, 140 g of 1, 3-butadiene, 0.93 g of TMEDA, and 0.45 mmol of n-butyllithium, followed by stirring at 50°C for 5 hours to cause a polymerization reaction. Then, 0.15 mol of an amine modifier was added and stirred at 0°C for 1 hour. The subsequent process was as described in the synthesis of copolymer (2), except for the adjustment of the cumulative amount of absorbed hydrogen. In this way, copolymer (5) was produced. The copolymer (5) had a degree of hydrogenation of 95 mol% and a weight average molecular weight (Mw) before the modification of 440,000.

[Table 1]

| | Copolymer (1) | Copolymer (2) | Copolymer (3) | Copolymer (4) | Copolymer (5) |
|---|---|---|---|---|---|
| Degree of hydrogenation (mol%) | 0 | 80 | 80 | 95 | 95 |
| Styrene content (% by mass) | 30 | 30 | 30 | 30 | 30 |
| Butadiene content (% by mass) | 70 | 70 | 70 | 70 | 70 |
| Weight average molecular weight (Mw) | 490,000 | 450,000 | 480,000 | 450,000 | 440,000 |
| Mw/Mn | 1.18 | 1.19 | 1.22 | 1.18 | 1.18 |

The chemicals used in the examples and comparative examples are listed below.

Natural rubber: TSR20
Copolymers (1) to (5): copolymers synthesized as above
Carbon black: SHOBLACK N330 ($N_2SA$: 75m$^2$/g, DBP: 102 mL/100 g) available from Cabot Japan K.K.
Silica: ULTRASIL VN3 ($N_2SA$: 180 m$^2$/g) available from Evonik
Silane coupling agent: Si69 (bis(3-triethoxysilylpropyl)tetrasulfide) available from Degussa
Oil: X-140 available from JX Nippon Oil & Energy Corporation
Antioxidant: Antigene 3C available from Sumitomo Chemical Co., Ltd.
Stearic acid: stearic acid beads "TSUBAKI" available from NOF Corporation
Zinc oxide: zinc oxide #1 available from Mitsui Mining & Smelting Co., Ltd.
Wax: Sunnoc N available from Ouchi Shinko Chemical Industrial Co., Ltd.
Sulfur: sulfur powder available from Tsurumi Chemical Industry Co., Ltd.
Vulcanization accelerator (1): Soxinol CZ (N-cyclohexyl-2-benzothiazolylsulfenamide) available from Sumitomo Chemical Co., Ltd.
Vulcanization accelerator (2): Soxinol D (1,3-diphenylguanidine) available from Sumitomo Chemical Co., Ltd.

(Examples and Comparative Examples)

According to the formulations shown in Table 2, the materials other than the sulfur and vulcanization accelerators were kneaded for 5 minutes at 150°C using a 1.7-L Banbury mixer (available from Kobe Steel, Ltd.) to give a kneaded mixture. Next, the sulfur and vulcanization accelerators were added to the kneaded mixture, followed by kneading for 5 minutes at 80°C using an open roll mill to give an unvulcanized rubber composition. The unvulcanized rubber composition was press-vulcanized for 20 minutes at 170°C in a 0.5 mm-thick mold to obtain a vulcanized rubber composition.

Separately, the unvulcanized rubber composition was formed into the shape of a base tread and assembled with other tire components on a tire building machine to build an unvulcanized tire. The unvulcanized tire was vulcanized at 170°C for 12 minutes to obtain a test tire (size: 195/65R15) .

<Evaluation items and test methods>

The vulcanized rubber compositions and test tires prepared as above were evaluated for the following items. Table 2 shows the results.

(Rubber tensile strength)

The vulcanized rubber compositions were subjected to a tensile test in accordance with JIS K 6251 to measure the elongation at break. The results are expressed as an index, with Comparative Example 1 set equal to 100. A higher index indicates greater rubber tensile strength.

(Rubber tensile strength index) = (Rubber tensile strength of each formulation)/(Rubber tensile strength of Comparative Example 1) × 100

(Fuel economy)

The tan δ of the vulcanized rubber compositions was measured at a dynamic strain amplitude of 1%, a frequency of 10 Hz, and a temperature of 50°C using a spectrometer (available from Ueshima Seisakusho Co., Ltd.). The reciprocals of the tan δ values are expressed as an index, with Comparative Example 1 set equal to 100. A higher index indicates a smaller rolling resistance, which in turn indicates better fuel economy.

<Handling stability>

Each set of test tires were mounted on all the wheels of a front-engine, front-wheel-drive car of 2,000 cc displacement made in Japan. A driver drove the car on a test track. Handling stability was subjectively evaluated by the driver. The handling stability ratings of the test tires are shown relative to Comparative Example 1, which was set to 100. A higher value indicates better handling stability.

(Rubber hardness)

The rubber hardness of the vulcanized rubber compositions was measured using a type A durometer in accordance with JIS K 6253 "Rubber, vulcanized or thermoplastic - Determination of hardness". Then, rubber hardness indices were calculated using the equation below, with the rubber hardness of Comparative Example 1 set equal to 100. A higher index indicates a greater rubber hardness, which in turn indicates better handling stability.

(Rubber hardness index) = (Rubber hardness of each formulation)/(Rubber hardness of Comparative Example 1) × 100

[Table 2]

| | | Degree of hydrogenation (mol%) | Comparative Example | Comparative Example | Example | Example | Example | Example | Example | Comparative Example | Comparative Example | Comparative Example | Example |
|---|---|---|---|---|---|---|---|---|---|---|---|---|---|
| | | | 1 | 2 | 1 | 2 | 3 | 4 | 5 | 3 | 4 | 5 | 6 |
| Formulation (parts by mass) | Natural rubber | — | — | — | — | — | — | — | — | — | — | 50 | — |
| | Copolymer (1) | — | 100 | — | — | — | — | — | — | — | — | — | — |
| | Copolymer (2) | 60 | — | 100 | — | — | — | — | — | — | — | — | — |
| | Copolymer (3) | 80 | — | — | 100 | — | — | — | — | — | — | — | — |
| | Copolymer (4) | 95 | — | — | — | 100 | 100 | 100 | 100 | 100 | 100 | 50 | — |
| | Copolymer (5) | 95 | — | — | — | — | — | — | — | — | — | — | 100 |
| | Carbon black | — | 50 | 50 | 50 | 50 | 70 | 50 | 35 | 20 | 90 | 50 | 50 |
| | Silica | — | 30 | 30 | 30 | 30 | 30 | 50 | 90 | 30 | 30 | 30 | 30 |
| | Silane coupling agent | — | 3 | 3 | 3 | 3 | 3 | 6 | 10 | 3 | 3 | 3 | 3 |
| | Oil | — | 10 | 10 | 10 | 10 | 10 | 10 | 10 | 10 | 10 | 10 | 10 |
| | Antioxidant | — | 1.5 | 1.5 | 1.5 | 1.5 | 1.5 | 1.5 | 1.5 | 1.5 | 1.5 | 1.5 | 1.5 |
| | Stearic acid | — | 2 | 2 | 2 | 2 | 2 | 2 | 2 | 2 | 2 | 2 | 2 |
| | Zinc oxide | — | 2.5 | 2.5 | 2.5 | 2.5 | 2.5 | 2.5 | 2.5 | 2.5 | 2.5 | 2.5 | 2.5 |
| | Wax | — | 1 | 1 | 1 | 1 | 1 | 1 | 1 | 1 | 1 | 1 | 1 |
| | Sulfur | — | 2 | 2 | 2 | 2 | 2 | 2 | 2 | 2 | 2 | 15 | 2 |
| | Vulcanization accelerator (1) | — | 2 | 2 | 2 | 2 | 2 | 2 | 2 | 2 | 2 | 2 | 2 |
| | Vulcanization accelerator (2) | — | 1 | 1 | 1 | 1 | 1 | 1 | 1 | 1 | 1 | 1 | 1 |
| Evaluation | Rubber tensile strength | — | 100 | 100 | 130 | 140 | 150 | 145 | 130 | 95 | 135 | 90 | 143 |
| | Fuel economy | — | 100 | 100 | 115 | 125 | 105 | 118 | 101 | 140 | 95 | 88 | 128 |
| | Handling stability | — | 100 | 94 | 110 | 115 | 117 | 114 | 103 | 90 | 119 | 89 | 125 |
| | Rubber hardness | — | 100 | 96 | 103 | 105 | 107 | 106 | 109 | 90 | 109 | 94 | 105 |

The results in Table 2 demonstrate that rubber tensile strength, fuel economy, and handling stability were significantly improved in Examples 1 to 6 using rubber compositions each of which contained a hydrogenated styrene-butadiene copolymer having a degree of hydrogenation of 75 mol% or more in an amount of 75% by mass or more per 100% by mass of the rubber component, and carbon black in an amount of 30 to 80 parts by mass relative to 100 parts by mass of the rubber component.

## Claims

1. A pneumatic tire comprising a base tread formed from a rubber composition, the rubber composition comprising:

   a hydrogenated styrene-butadiene copolymer obtained by copolymerization of an aromatic vinyl compound and a conjugated diene compound, the hydrogenated styrene-butadiene copolymer having a degree of hydrogenation of the conjugated diene units of 75 mol% or more, a weight average molecular weight of 200, 000 to 2,000,000, and a styrene content of 5% to 40% by mass;
   carbon black; and
   silica,
   the rubber composition comprising, per 100% by mass of a rubber component, 75% by mass or more of the hydrogenated styrene-butadiene copolymer,
   the rubber composition comprising, relative to 100 parts by mass of the rubber component, 30 to 80 parts by mass of the carbon black and 10 to 80 parts by mass of the silica,
   wherein the base tread refers to an inner layer of a tread having a multilayer structure.

2. The pneumatic tire according to claim 1,
   wherein the hydrogenated styrene-butadiene copolymer has a degree of hydrogenation of 90 mol% or more.

3. The pneumatic tire according to claim 1 or 2, wherein the hydrogenated styrene-butadiene copolymer is a hydrogenated modified styrene-butadiene copolymer.

4. The pneumatic tire according to any one of claims 1 to 3,
   wherein the hydrogenated styrene-butadiene copolymer is present in an amount of 90% to 100% by mass per 100% by mass of the rubber component.

## Patentansprüche

1. Luftreifen, umfassend eine Laufstreifenbasis, die mit einer Kautschukzusammensetzung gebildet ist, wobei die Kautschukzusammensetzung umfasst:

   ein hydriertes, durch Copolymerisation einer aromatischen Vinylverbindung und einer konjugierten Dienverbindung erhaltenes Styrol-Butadien-Copolymer, wobei das hydrierte Styrol-Butadien-Copolymer einen Hydrierungsgrad der konjugierten Dieneinheiten von 75 Molprozent oder mehr, ein gewichtsmittleres Molekulargewicht von 200.000 bis 2.000.000 und einen Styrolgehalt von 5 bis 40 Massenprozent aufweist;
   Ruß; und
   Siliciumdioxid,
   wobei die Kautschukzusammensetzung, pro 100 Massenprozent einer Kautschukkomponente, 75 Massenprozent oder mehr des hydrierten Styrol-Butadien-Copolymers umfasst,
   wobei die Kautschukzusammensetzung, bezogen auf 100 Massenteile der Kautschukkomponente, 30 bis 80 Massenteile des Rußes und 10 bis 80 Massenteile des Siliciumdioxids umfasst,
   wobei die Laufstreifenbasis eine innere Schicht eines Laufstreifens mit einem mehrschichtigen Aufbau bezeichnet.

2. Luftreifen nach Anspruch 1,
   wobei das hydrierte Styrol-Butadien-Copolymer einen Hydrierungsgrad von 90 Molprozent oder mehr aufweist.

3. Luftreifen nach Anspruch 1 oder 2,
   wobei das hydrierte Styrol-Butadien-Copolymer ein hydriertes modifiziertes Styrol-Butadien-Copolymer ist.

**4.** Luftreifen nach einem der Ansprüche 1 bis 3, wobei das hydrierte Styrol-Butadien-Copolymer in einer Menge von 90 bis 100 Massenprozent pro 100 Massenprozent der Kautschukkomponente vorhanden ist.

**Revendications**

**1.** Pneu comprenant une bande de roulement de base formée à partir d'une composition de caoutchouc, la composition de caoutchouc comprenant :

un copolymère styrène butadiène hydrogéné obtenu par copolymérisation d'un composé vinylique aromatique et d'un composé diénique conjugué, le copolymère styrène butadiène hydrogéné ayant un degré d'hydrogénation des unités diéniques conjuguées de 75 % molaire ou plus, un poids moléculaire moyen en poids de 200 000 à 2 000 000, et une teneur en styrène de 5 % à 40 % en masse ;
du noir de carbone ; et
de la silice,
la composition de caoutchouc comprenant, pour 100 % en masse d'un composé caoutchouc, 75 % en masse ou plus de copolymère styrène butadiène hydrogéné,
la composition de caoutchouc comprenant, par rapport à 100 parties en masse de composé caoutchouc, de 30 à 80 parties en masse de noir de carbone et de 10 à 80 parties en masse de silice,
dans lequel la bande de roulement de base fait référence à une couche interne d'une bande de roulement ayant une structure en multicouches.

**2.** Pneu selon la revendication 1, dans lequel le copolymère styrène butadiène hydrogéné a un degré d'hydrogénation de 90 % molaire ou plus.

**3.** Pneu selon la revendication 1 ou la revendication 2, dans lequel le copolymère styrène butadiène hydrogéné est un copolymère styrène butadiène modifié hydrogéné.

**4.** Pneu selon l'une quelconque des revendications 1 à 3, dans lequel le copolymère styrène butadiène hydrogéné est présent dans une quantité de 90% à 100 % en masse pour 100 % en masse de composé caoutchouc.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014133097 A1
- EP 2963087 A1
- WO 2014126184 A1
- EP 2957572 A1
- JP 2003277560 A
- JP 2008184517 A
- JP 2000344955 A
- JP H1275605 A
- JP H5271326 A
- JP H5271325 A
- JP H5222115 A
- JP H11292924 A
- JP 2000037632 A
- JP S59133203 A
- JP S635401 A
- JP S62218403 A
- JP H790017 A
- JP S4319960 B
- JP S4740473 B
- JP 2008285628 A
- JP 2008303360 A